# EUROPEAN PATENT APPLICATION

(11) **EP 4 845 042 A1**
(43) Date of publication of application: **25.11.2026**
(21) Application number: 25776582.6
(22) Date of filing: 21.02.2025
(51) Int. Cl.: H04B 7/0413

(54) **COMMUNICATION METHOD, DEVICE, AND STORAGE MEDIUM**

(30) Priority: 29.03.2024 CN 202410389159
(71) Applicant: Honor Device Co., Ltd., Shenzhen, Guangdong 518040 (CN)
(72) Inventor: CHEN, Zhe, Shenzhen, Guangdong 518040 (CN)
(74) Representative: MERH-IP Matias Erny Reichl Hoffmann Patentanwälte PartG mbB
(86) International application number: PCT/CN2025/078522
(87) International publication number: WO 2025/200893

(57) **Abstract**

Embodiments of this application provide a communication method, a device, and a storage medium. The method includes: A network device determines a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and sends the plurality of pieces of indication information, where when the information indicates the DMRS port corresponding to the antenna group, the information further indicates a number of CDM groups without data, or sends first indication information, where the first indication information indicates a number of CDM groups without data. In the foregoing solutions, a DMRS port corresponding to each antenna group belongs to a same CDM group, and DMRS ports corresponding to different antenna groups belong to different CDM groups, so that interference between antenna groups may be effectively suppressed in MIMO equalization processing.

## Description

This application claims priority to Chinese Patent Application No. 202410389159.0, filed with the China National Intellectual Property Administration on March 29, 2024 and entitled "COMMUNICATION METHOD, DEVICE, AND STORAGE MEDIUM", which is incorporated herein by reference in its entirety.

### TECHNICAL FIELD

This application relates to the field of communication technologies, and in particular, to a communication method, a device, and a storage medium.

### BACKGROUND

An existing communication system can support a maximum of eight layers of down link (down link, DL) single user (single user, SU)-multiple-input multiple-output (multiple input multiple output, MIMO) transmission. However, complexity and costs of a conventional eight-layer receiver are relatively high, and a low-complexity eight-layer receiver needs to be studied.

In a related technology, to reduce complexity of the eight-layer receiver, the eight-layer receiver may be divided into two four-layer sub-receivers, and independent MIMO equalization processing is separately performed on antenna groups corresponding to the two sub-receivers. This independent MIMO equalization processing uses only channel information of a corresponding antenna group and does not use channel information of all antennas. Therefore, interference caused by another antenna group cannot be suppressed.

### SUMMARY

Embodiments of this application provide a communication method, a device, and a storage medium. A DMRS port corresponding to each antenna group belongs to a same CDM group, and DMRS ports corresponding to different antenna groups belong to different CDM groups, so that interference between antenna groups may be effectively suppressed in MIMO equalization processing.

According to a first aspect, an embodiment of this application provides a communication method, including: receiving a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and when the information indicates the DMRS port corresponding to the antenna group, the information further indicates a number of CDM groups without data, or receiving first indication information, where the first indication information indicates a number of CDM groups without data.

In a possible implementation, the information further indicates a number of transport layers corresponding to the antenna group.

In a possible implementation, a number of transport layers corresponding to an antenna group is the same as a number of DMRS ports corresponding to the antenna group.

In a possible implementation, the information further indicates a number of symbols occupied by a front-loaded DMRS.

In a possible implementation, different antenna groups have different function modules for baseband processing.

In a possible implementation, the plurality of pieces of indication information include second indication information and third indication information, the second indication information indicates an identifier of first information, and the third indication information indicates an identifier of second information, where the first information is any information in a plurality of pieces of first information, the first information indicates a DMRS port corresponding to a first antenna group, and the DMRS port corresponding to the first antenna group is at least one of DMRS ports corresponding to a first CDM group; and the second information is any information in a plurality of pieces of second information, the second information indicates a DMRS port corresponding to a second antenna group, and the DMRS port corresponding to the second antenna group is at least one of DMRS ports corresponding to a second CDM group.

In a possible implementation, the first CDM group is any CDM group in DMRS configuration type 1; and the second CDM group is a CDM group other than the first CDM group in DMRS configuration type 1.

In a possible implementation, the first CDM group is any CDM group in DMRS configuration type 2; and the second CDM group is any CDM group other than the first CDM group in DMRS configuration type 2.

In a possible implementation, the plurality of pieces of indication information are carried in DCI, a MAC CE, or an RRC message.

In a possible implementation, the first indication information is carried in DCI, a MAC CE, or an RRC message.

In a possible implementation, the plurality of antenna groups are receive antenna groups of a terminal device.

According to a second aspect, an embodiment of this application provides a communication method, including: determining a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and sending the plurality of pieces of indication information, where when the information indicates the DMRS port corresponding to the antenna group, the information further indicates a number of CDM groups without data, or sending first indication information, where the first indication information indicates a number of CDM groups without data.

In a possible implementation, the information further indicates a number of transport layers corresponding to the antenna group.

In a possible implementation, a number of transport layers corresponding to an antenna group is the same as a number of DMRS ports corresponding to the antenna group.

In a possible implementation, the information further indicates a number of symbols occupied by a front-loaded DMRS.

In a possible implementation, different antenna groups have different function modules for baseband processing.

In a possible implementation, the plurality of pieces of indication information include second indication information and third indication information, the second indication information indicates an identifier of first information, and the third indication information indicates an identifier of second information, where the first information is any information in a plurality of pieces of first information, the first information indicates a DMRS port corresponding to a first antenna group, and the DMRS port corresponding to the first antenna group is at least one of DMRS ports corresponding to a first CDM group; and the second information is any information in a plurality of pieces of second information, the second information indicates a DMRS port corresponding to a second antenna group, and the DMRS port corresponding to the second antenna group is at least one of DMRS ports corresponding to a second CDM group.

In a possible implementation, the first CDM group is any CDM group in DMRS configuration type 1; and the second CDM group is a CDM group other than the first CDM group in DMRS configuration type 1.

In a possible implementation, the first CDM group is any CDM group in DMRS configuration type 2; and the second CDM group is any CDM group other than the first CDM group in DMRS configuration type 2.

In a possible implementation, a plurality of pieces of second indication information are carried in DCI, a MAC CE, or an RRC message.

In a possible implementation, the first indication information is carried in DCI, a MAC CE, or an RRC message.

In a possible implementation, the plurality of antenna groups are receive antenna groups of a terminal device.

According to a third aspect, an embodiment of this application provides a communication apparatus, including: a receiving module, configured to: receive a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and when the information indicates the DMRS port corresponding to the antenna group, the information further indicates a number of CDM groups without data, or receive first indication information, where the first indication information indicates a number of CDM groups without data.

In a possible implementation, the information further indicates a number of transport layers corresponding to the antenna group.

In a possible implementation, a number of transport layers corresponding to an antenna group is the same as a number of DMRS ports corresponding to the antenna group.

In a possible implementation, the information further indicates a number of symbols occupied by a front-loaded DMRS.

In a possible implementation, different antenna groups have different function modules for baseband processing.

In a possible implementation, the plurality of pieces of indication information include second indication information and third indication information, the second indication information indicates an identifier of first information, and the third indication information indicates an identifier of second information, where the first information is any information in a plurality of pieces of first information, the first information indicates a DMRS port corresponding to a first antenna group, and the DMRS port corresponding to the first antenna group is at least one of DMRS ports corresponding to a first CDM group; and the second information is any information in a plurality of pieces of second information, the second information indicates a DMRS port corresponding to a second antenna group, and the DMRS port corresponding to the second antenna group is at least one of DMRS ports corresponding to a second CDM group.

In a possible implementation, the first CDM group is any CDM group in DMRS configuration type 1; and the second CDM group is a CDM group other than the first CDM group in DMRS configuration type 1.

In a possible implementation, the first CDM group is any CDM group in DMRS configuration type 2; and the second CDM group is any CDM group other than the first CDM group in DMRS configuration type 2.

In a possible implementation, a plurality of pieces of second indication information are carried in DCI, a MAC CE, or an RRC message.

In a possible implementation, the first indication information is carried in DCI, a MAC CE, or an RRC message.

In a possible implementation, the plurality of antenna groups are receive antenna groups of a terminal device.

According to a fourth aspect, an embodiment of this application provides a communication apparatus, including: a determining module, configured to determine a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and a sending module, configured to: send the plurality of pieces of indication information, where when the information indicates the DMRS port corresponding to the antenna group, the information further indicates a number of CDM groups without data, or send first indication information, where the first indication information indicates a number of CDM groups without data.

In a possible implementation, the information further indicates a number of transport layers corresponding to the antenna group.

In a possible implementation, a number of transport layers corresponding to an antenna group is the same as a number of DMRS ports corresponding to the antenna group.

In a possible implementation, the information further indicates a number of symbols occupied by a front-loaded DMRS.

In a possible implementation, different antenna groups have different function modules for baseband processing.

In a possible implementation, the plurality of pieces of indication information include second indication information and third indication information, the second indication information indicates an identifier of first information, and the third indication information indicates an identifier of second information, where the first information is any information in a plurality of pieces of first information, the first information indicates a DMRS port corresponding to a first antenna group, and the DMRS port corresponding to the first antenna group is at least one of DMRS ports corresponding to a first CDM group; and the second information is any information in a plurality of pieces of second information, the second information indicates a DMRS port corresponding to a second antenna group, and the DMRS port corresponding to the second antenna group is at least one of DMRS ports corresponding to a second CDM group.

In a possible implementation, the first CDM group is any CDM group in DMRS configuration type 1; and the second CDM group is a CDM group other than the first CDM group in DMRS configuration type 1.

In a possible implementation, the first CDM group is any CDM group in DMRS configuration type 2; and the second CDM group is any CDM group other than the first CDM group in DMRS configuration type 2.

In a possible implementation, a plurality of pieces of second indication information are carried in DCI, a MAC CE, or an RRC message.

In a possible implementation, the first indication information is carried in DCI, a MAC CE, or an RRC message.

In a possible implementation, the plurality of antenna groups are receive antenna groups of a terminal device.

According to a fifth aspect, an embodiment of this application provides a terminal device, including: a processor and a memory; the memory stores computer-executable instructions; and the processor executes the computer-executable instructions stored in the memory, so that the terminal device performs the method according to the first aspect or any possible implementation of the first aspect.

According to a sixth aspect, an embodiment of this application provides a network device, including: a processor and a memory; the memory stores computer-executable instructions; and the processor executes the computer-executable instructions stored in the memory, so that the network device performs the method according to the second aspect or any possible implementation of the second aspect.

According to a seventh aspect, an embodiment of this application provides a computer-readable storage medium. The computer-readable storage medium stores a computer program or instructions, and the computer program or the instructions are executed by a processor to implement the method according to the first aspect or any possible implementation of the first aspect, or implement the method according to the second aspect or any possible implementation of the second aspect.

According to an eighth aspect, an embodiment of this application provides a computer program product. The computer program product includes a computer program, and when the computer program is run, a computer is enabled to perform the method according to the first aspect or any possible implementation of the first aspect, or the computer is enabled to perform the method according to the second aspect or any possible implementation of the second aspect.

According to a ninth aspect, an embodiment of this application provides a chip or a chip system. The chip or the chip system includes at least one processor and a communication interface, the communication interface and the at least one processor are interconnected via a line, and the at least one processor is configured to run a computer program or instructions, to perform the method according to the first aspect or any possible implementation of the first aspect, or perform the method according to the second aspect or any possible implementation of the second aspect. The communication interface in the chip may be an input/output interface, a pin, a circuit, or the like.

Embodiments of this application provide a communication method, a device, and a storage medium. The method includes: A network device determines a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and sends the plurality of pieces of indication information, where when the information indicates the DMRS port corresponding to the antenna group, the information further indicates a number of CDM groups without data, or sends first indication information, where the first indication information indicates a number of CDM groups without data. In the foregoing solutions, a DMRS port corresponding to each antenna group belongs to a same CDM group, and DMRS ports corresponding to different antenna groups belong to different CDM groups, so that interference between antenna groups may be effectively suppressed in MIMO equalization processing.

### BRIEF DESCRIPTION OF DRAWINGS

FIG. 1 is a diagram of an architecture of a communication system according to an embodiment of this application;
FIG. 2 is a schematic diagram of a structure of two sub-receivers according to an embodiment of this application;
FIG. 3A is a schematic diagram of a structure of type 1 of two sub-receivers according to an embodiment of this application;
FIG. 3B is a schematic diagram of a structure of type 2 of two sub-receivers according to an embodiment of this application;
FIG. 3C is a schematic diagram of a structure of type 3 of two sub-receivers according to an embodiment of this application;
FIG. 4A is a schematic diagram of a DMRS resource of DMRS configuration type 1 according to an embodiment of this application;
FIG. 4B is a schematic diagram of a DMRS resource of DMRS configuration type 2 according to an embodiment of this application;
FIG. 5 is a schematic flowchart of a communication method according to an embodiment of this application;
FIG. 6 is a schematic diagram of a structure of a communication apparatus according to an embodiment of this application;
FIG. 7 is a schematic diagram of a structure of another communication apparatus according to an embodiment of this application;
FIG. 8 is a schematic diagram of a structure of a terminal device according to an embodiment of this application; and
FIG. 9 is a schematic diagram of a structure of a network device according to an embodiment of this application.

### DESCRIPTION OF EMBODIMENTS

In embodiments of this application, words such as "first" and "second" are used to distinguish between same items or similar items with basically same functions and effects. For example, first indication information and second indication information are merely used to distinguish between different indication information, but not used to limit a sequence thereof. A person skilled in the art may understand that the words such as "first" and "second" do not limit a quantity or an execution order, and the words such as "first" and "second" do not indicate a definite difference.

To facilitate a clear description of the technical solutions in the embodiments of this application, the words such as "example" or "for example" in the embodiments of this application are used to indicate an example, an illustration, or a description. Any embodiment or design solution described as "example" or "for example" in this application should not be construed as being preferred or advantageous over another embodiment or design solution. To be precise, the use of the term such as "exemplary" or "for example" is intended to present a related concept in a specific manner.

In the embodiments of this application, "at least one" means one or more, and "a plurality of" means two or more than two. "and/or" describes an association relationship between associated objects, and represents that three relationships may exist. For example, A and/or B may represent the following cases: only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be noted that in the embodiments of this application, "when ... " or "in a case of ... " may be an instantaneous occurrence time of a case, or may be a period of time after occurrence of a case, which is not specifically limited in the embodiments of this application.

To better understand the communication method provided in the embodiments of this application, the following first describes an architecture of a communication system in the embodiments of this application.

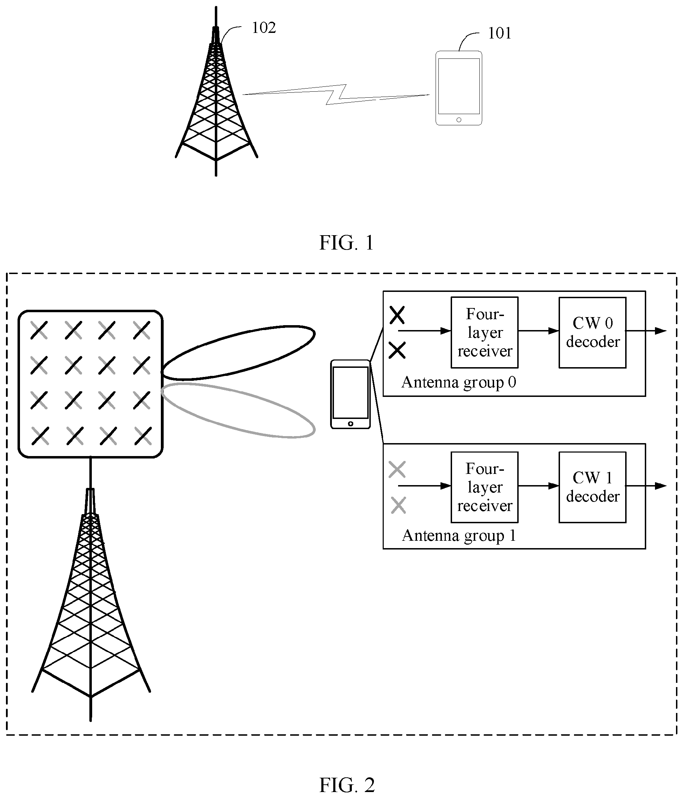

FIG. 1 is a diagram of an architecture of a communication system according to an embodiment of this application. As shown in FIG. 1, the communication system 100 includes a terminal device 101 and a network device 102. The terminal device 101 includes a plurality of antenna groups, and the terminal device 101 performs wireless communication with the network device 102 by using the plurality of antenna groups.

The terminal device involved in the embodiments of this application may also be referred to as a terminal, may be a device with a wireless transceiver function, and may be deployed on land, including indoor or outdoor, handheld or vehicle-mounted; may be deployed on water (for example, on a ship); or may be deployed in the air (for example, on an airplane, a balloon, or a satellite). The terminal device may be user equipment (user equipment, UE), where the UE includes a handheld device, an onboard device, a wearable device, or a computing device that has a wireless communication function. For example, the UE may be a mobile phone (mobile phone), a tablet computer, or a computer with a wireless transceiver function. The terminal device may further be a virtual reality (virtual reality, VR) terminal device, an augmented reality (augmented reality, AR) terminal device, a wireless terminal device in industrial control, a wireless terminal device in self driving, a wireless terminal device in remote medical, a wireless terminal device in a smart grid, a wireless terminal device in a smart city (smart city), a wireless terminal device in a smart home (smart home), or the like. In the embodiments of this application, an apparatus configured to implement a function of the terminal device may be a terminal device, or may be an apparatus that can support the terminal device in implementing the function, for example, a chip system. The apparatus may be installed in the terminal device.

The network device involved in the embodiments of this application may be a radio access network (radio access network, RAN) device in a mobile communication system. The RAN device is mainly responsible for radio resource management on an air interface side, quality of service (quality of service, QoS) management, data compression and encryption, and the like. For example, a base station NodeB, an evolved base station eNodeB, a base station in a 5G mobile communication system or a new radio (new radio, NR) communication system, a base station in a future mobile communication system, or the like. In the embodiments of this application, an apparatus configured to implement a function of the network device may be the network device, or may be an apparatus, for example, a chip system, that can support the network device in implementing the function. The apparatus may be installed in the network device.

The technical solutions provided in the embodiments of this application may be applied to a long term evolution (long term evolution, LTE) architecture, and may further be applied to a universal mobile telecommunications system (universal mobile telecommunications system, UMTS) terrestrial radio access network (UMTS terrestrial radio access network, UTRAN) architecture, or a global system for mobile communication (global system for mobile communication, GSM)/enhanced data rate for GSM evolution (enhanced data rate for GSM evolution, EDGE) radio access network (GSM EDGE radio access network, GERAN) architecture. In addition, the technical solutions provided in the embodiments of this application may further be applied to any other wireless communication system having a similar structure and function, for example, a public land mobile network (public land mobile network, PLMN) system, a 5G communication system, or a communication system after 5G. This is not limited in the embodiments of this application.

To clearly describe the technical solutions in the embodiments of this application, the following briefly describes some terms and technologies related to the embodiments of this application.

### 1. Receiver type

A multi-layer receiver is divided into two sub-receivers (sub-receiver) for independent MIMO detection, which may significantly reduce MIMO reception complexity. For example, a six-layer receiver may be divided into two three-layer sub-receivers, and an eight-layer receiver may be divided into two four-layer sub-receivers. Each sub-receiver corresponds to one antenna group. As shown in FIG. 2, a base station may generate two beams by using a plurality of antennas. Antenna group 0 on a terminal device side may receive data and a reference signal transmitted on beam 0, and antenna group 1 may receive data and a reference signal transmitted on beam 1.

For the structure of the foregoing receiver, during specific implementation, based on different function division manners, a plurality of receiver types may be derived.

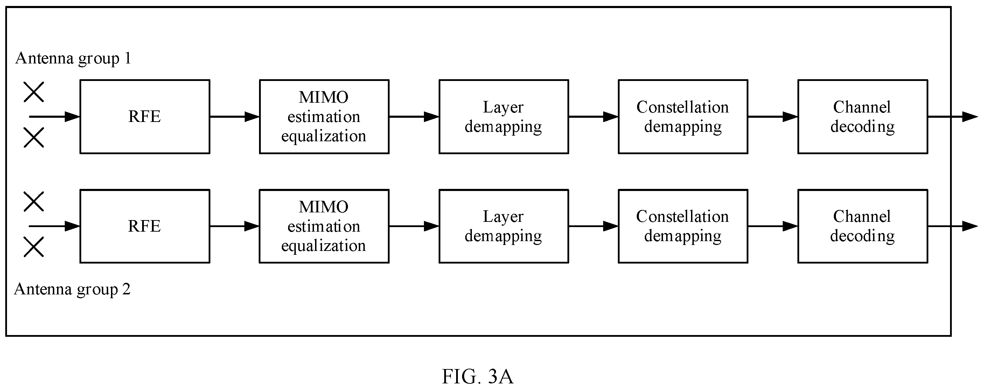

Type 1: Antennas, radio frequency front-ends (radio frequency front-end, RFE), and baseband processing functions of two sub-receivers are completely independent, as shown in FIG. 3A.

The advantage of this type is that an eight-layer receiver may be easily constructed by using two existing four-layer receivers.

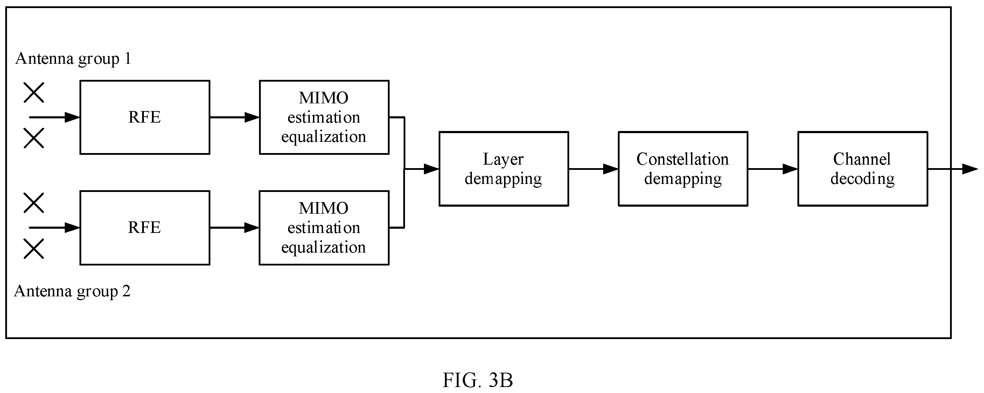

Type 2: Two sub-receivers share a channel decoding function, and antennas, RFEs, and other baseband processing functions are completely independent, as shown in FIG. 3B.

When the base station schedules a physical downlink shared channel (physical downlink shared channel, PDSCH) that uses two-layer transmission, and indicates that a receiving policy is: antenna group 1 receives one layer, and antenna group 2 receives the other layer, according to the current protocol, the PDSCH carries only one code word (code word, CW) because a number of transport layers does not exceed four.

Because functions of Type 1 are completely independent, two channel decoding modules can obtain only some bits of the CW, and cannot complete decoding of the CW. To resolve this problem, the protocol needs to be enhanced. For Type 2, because two channels share a channel decoding module, all bits of the CW can be obtained, and decoding can be completed without additional enhancement to the protocol.

Therefore, Type 2 has the advantage of being able to reuse the existing protocol to a large extent, or making minor changes to the protocol.

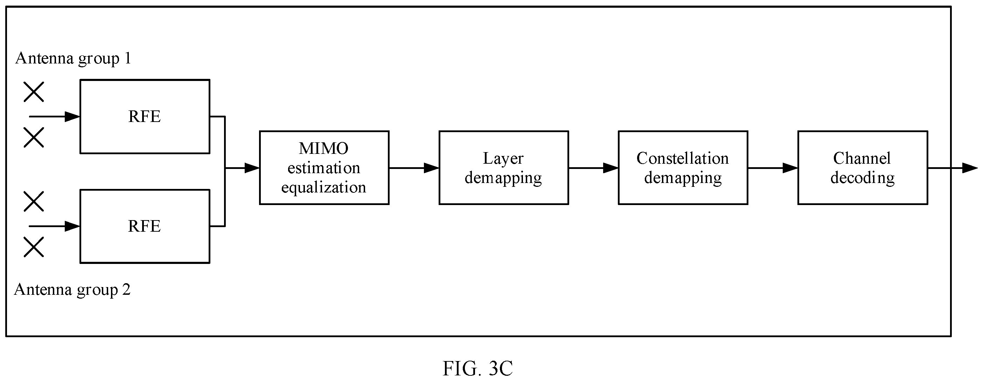

Type 3: This type has a basically same functional structure as a conventional eight-layer receiver, as shown in FIG. 3C, and the difference lies in: this type imposes restrictions on a MIMO equalization module. For a PDSCH with four transport layers, MIMO equalization is performed on two antenna groups independently (the same as that of Type 1 and Type 2). For a PDSCH with transport layers≤4, MIMO equalization is performed on two antenna groups jointly (the same as that of the conventional 8Rx receiver).

An advantage of this type lies in reducing complexity of MIMO equalization with four transport layers and maintaining performance of MIMO equalization with transport layers≤4.

The transport layer may also be referred to as a rank (rank).

For different receiver structures, scheduling indications of the base station are different. For example:
for Type 1: When the rank>1, the PDSCH always carries 2 CWs; and
for Type 2/3: When the rank≤4, the PDSCH carries 1 CW, and when the rank>4, the PDSCH carries 2 CWs.

### 2. Demodulation reference signal (demodulation reference signal, DMRS) configuration type

NR supports two DMRS configuration types: DMRS configuration type 1 and DMRS configuration type 2.

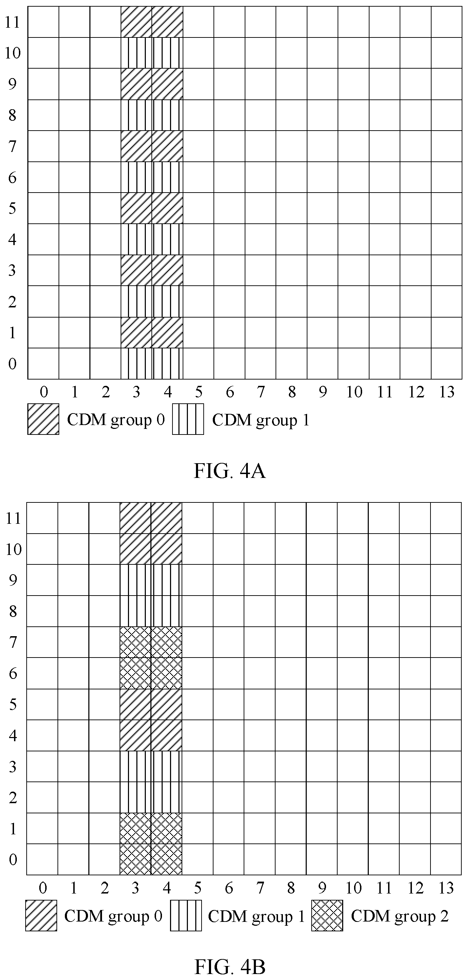

DMRS configuration type 1 includes two code division multiplexing (code division multiplexing, CDM) groups and supports a maximum of eight DMRS ports, and a specific resource element (resource element, RE) structure may be shown in FIG. 4A, where a horizontal axis is a symbol, and a vertical axis is a subcarrier. CDM group 0, bearing DMRS ports 0, 1, 4, 5; and CDM group 1, bearing DMRS ports 2, 3, 6, 7.

DMRS configuration type 2 includes three CDM groups and supports a maximum of 12 DMRS ports, and a specific RE structure may be shown in FIG. 4B, where a horizontal axis is a symbol, and a vertical axis is a subcarrier. CDM group 0, bearing DMRS ports 0, 1, 6, 7; CDM group 1, bearing DMRS ports 2, 3, 8, 9; and CDM group 2, bearing DMRS ports 4, 5, 10, 11.

3. Currently, when performing scheduling for the terminal device, the base station may use an antenna port (antenna port) field in downlink control information (downlink control information, DCI) to indicate a DMRS port, as shown in Table 1 and Table 2.

**Table 1 DMRS port allocation manner for DMRS configuration type 1 with a maximum of two symbols (Antenna port (s) (1000+DMRS port), dmrs-Type=1, maxLength=2)**

| One codeword: Codeword 0 is available, and codeword 1 is unavailable | | | | One codeword: Codeword 0 is available, and codeword 1 is available | | | |
|---|---|---|---|---|---|---|---|
| Bit field value | Number of CDM groups without data | DMRS port | Number of symbols occupied by a front-loaded DMRS | Bit field value | Number of CDM groups without data | DMRS port | Number of symbols occupied by a front-loaded DMRS |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 2 | 0, 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0, 1 | 2 | | | | |
| 21 | 2 | 2, 3 | 2 | | | | |
| 22 | 2 | 4, 5 | 2 | | | | |
| 23 | 2 | 6, 7 | 2 | | | | |
| 24 | 2 | 0, 4 | 2 | | | | |
| 25 | 2 | 2, 6 | 2 | | | | |
| 26 | 2 | 0, 1, 4 | 2 | | | | |
| 27 | 2 | 2, 3, 6 | 2 | | | | |
| 28 | 2 | 0, 1, 4, 5 | 2 | | | | |
| 29 | 2 | 2, 3, 6, 7 | 2 | | | | |
| 30 | 2 | 0, 2, 4, 6 | 2 | | | | |
| 31 | 2 | 0, 2, 3 | 1 | | | | |

**Table 2 DMRS port allocation manner for DMRS configuration type 2 with a maximum of two symbols (Antenna port (s) (1000+DMRS port), dmrs-Type=2, maxLength=2)**

| One codeword: Codeword 0 is available, and codeword 1 is unavailable | | | | One codeword: Codeword 0 is available, and codeword 1 is available | | | |
|---|---|---|---|---|---|---|---|
| Bit field value | Number of CDM groups without data | DMRS port | Number of symbols occupied by a front-loaded DMRS | Bit field value | Number of CDM groups without data | DMRS port | Number of symbols occupied by a front-loaded DMRS |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1,2,3,6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6-63 | Reserved | Reserved | Reserved |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 2 | 0, 2, 3 | 1 | | | | |
| 59-63 | Reserved | Reserved | Reserved | | | | |

To obtain a spatial multiplexing gain, two antenna groups are usually placed in two far-away locations, such as an upper part and a lower part of the terminal, which means that channel characteristics (such as fading and Doppler) corresponding to the two antenna groups may be quite different. For receiver type 1, to reduce complexity, independent MIMO equalization processing is used for two antenna groups. Compared with conventional joint MIMO equalization processing, this independent MIMO equalization processing is more sensitive to interference between antenna groups.

Based on the foregoing technical problem, an embodiment of this application provides a communication method, and a main inventive idea of the communication method is as follows: A network device determines a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and sends the plurality of pieces of indication information, where when the information indicates the DMRS port corresponding to the antenna group, the information further indicates a number of CDM groups without carrying data, or sends first indication information, where the first indication information indicates a number of CDM groups without carrying data. Because a DMRS port corresponding to each antenna group belongs to a same CDM group, and DMRS ports corresponding to different antenna groups belong to different CDM groups, impact of interference between antenna groups on channel estimation may be reduced. In addition, interference strength caused by other antenna groups may further be accurately estimated on each antenna group. In this way, interference between antenna groups may be more effectively suppressed in MIMO equalization processing, thereby improving performance.

The technical solutions of this application are described in detail with reference to specific embodiments below. It should be noted that the following embodiments may exist alone or may be combined with each other. Same or similar content, for example, explanations and descriptions of terms or nouns and explanations and descriptions of steps, may be mutually referenced in different embodiments, and is not described again.

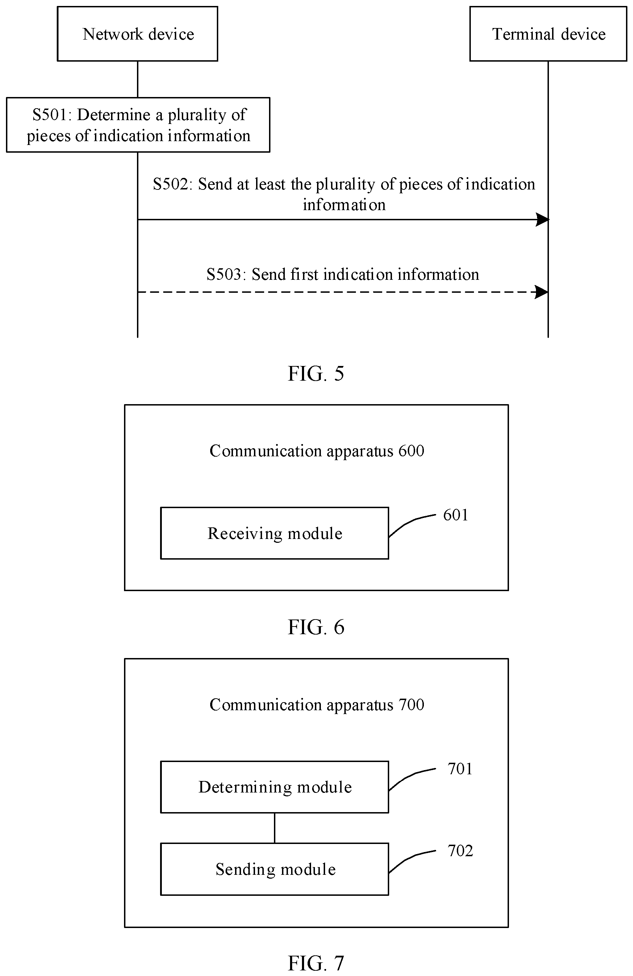

FIG. 5 is a schematic flowchart of a communication method according to an embodiment of this application. As shown in FIG. 5, the communication method includes the following steps.

S501: A network device determines a plurality of pieces of indication information.

Each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups.

A terminal device includes a plurality of antenna groups, and the plurality of antenna groups may be receive antenna groups of the terminal device, that is, antenna groups used by the terminal device to receive downlink data.

For any antenna group, a DMRS port corresponding to the antenna group may be a DMRS port corresponding to a transport layer corresponding to the antenna group.

The identifier of the information may be indicated by using a bit field value (value) of the indication information.

A number of pieces of indication information is the same as a number of the receive antenna groups of the terminal device, and each piece of indication information indicates whether a DMRS port corresponding to any antenna group in the plurality of antenna groups or a CDM group corresponding to the antenna group is occupied.

For example, if the number of pieces of indication information is N, and N is a positive integer greater than 1, a 1^{st} piece of indication information indicates whether a DMRS port corresponding to a 1^{st} antenna group or a CDM group corresponding to the 1^{st} antenna group is occupied, where the DMRS port corresponding to the 1^{st} antenna group belongs to a 1^{st} CDM group; and a 2^{nd} piece of indication information indicates whether a DMRS port corresponding to a 2^{nd} antenna group or a CDM group corresponding to the 2^{nd} antenna group is occupied, where the DMRS port corresponding to the 2^{nd} antenna group belongs to a 2^{nd} CDM group. By analogy, an n^{th} piece of indication information indicates whether a DMRS port corresponding to an n^{th} antenna group or a CDM group corresponding to the n^{th} antenna group is occupied, where the DMRS port corresponding to the n^{th} antenna group belongs to an n^{th} CDM group.

It should be noted that N pieces of indication information are in a one-to-one correspondence with N antenna groups, and the N antenna groups are in a one-to-one correspondence with N CDM groups. The above example describes only one correspondence, and a specific correspondence is not limited in this application, as long as one-to-one correspondence is guaranteed. For example, the 1^{st} piece of indication information may further indicate whether the DMRS port corresponding to the n^{th} antenna group or the CDM group corresponding to the n^{th} antenna group is occupied, where the DMRS port corresponding to the n^{th} antenna group belongs to the 1^{st} CDM group; and the 2^{nd} piece of indication information indicates whether a DMRS port corresponding to an (N-1)^{th} antenna group or a CDM group corresponding to the (N-1)^{th} antenna group is occupied, where the DMRS port corresponding to the (N-1)^{th} antenna group belongs to the 2^{nd} CDM group. By analogy, the n^{th} piece of indication information indicates whether the DMRS port corresponding to the 1^{st} antenna group or the CDM group corresponding to the 1^{st} antenna group is occupied, where the DMRS port corresponding to the 1^{st} antenna group belongs to the n^{th} CDM group.

The CDM group corresponding to the antenna group may refer to a CDM group to which the DMRS port corresponding to the antenna group belongs.

In a possible implementation, each piece of information further indicates a number of transport layers corresponding to a corresponding antenna group, that is, each piece of information may further indicate a DMRS port corresponding to any antenna group in the plurality of antenna groups and a number of transport layers corresponding to the antenna group.

Each piece of information may implicitly indicate a number of transport layers corresponding to a corresponding antenna group, or may explicitly indicate the number of transport layers corresponding to the corresponding antenna group.

A number of DMRS ports corresponding to one antenna group is the same as a number of transport layers corresponding to the antenna group.

In a possible implementation, each piece of information may further indicate a number of symbols occupied by a front-load DMRS (number of front-load symbols).

A manner for indicating a number of CDM groups without data is described below in three cases.

Case 1: A field value is introduced into a bit field of each piece of indication information, to indicate whether a CDM group corresponding to a corresponding antenna group is occupied.

In this case, some information in the plurality of pieces of information indicates the DMRS port corresponding to the antenna group, and some information indicates whether the CDM group corresponding to the antenna group is occupied. For any one of the plurality of pieces of information, any one of the following may be indicated:
(1) a DMRS port corresponding to any antenna group in a plurality of antenna groups;
(2) a DMRS port corresponding to any antenna group in a plurality of antenna groups and a number of symbols occupied by a front-load DMRS;
(3) a DMRS port corresponding to any antenna group in a plurality of antenna groups and a number of transport layers corresponding to the antenna group;
(4) a DMRS port corresponding to any antenna group in a plurality of antenna groups, a number of transport layers corresponding to the antenna group, and a number of symbols occupied by a front-load DMRS;
(5) whether a CDM corresponding to any antenna group in a plurality of antenna groups is occupied; and
(6) whether a CDM corresponding to any antenna group in a plurality of antenna groups is occupied, and a number of symbols occupied by a front-load DMRS.

Case 2: A group of field values is introduced into a bit field of a piece of indication information, to indicate the number of CDM groups without data.

In this case, the piece of indication information may indicate any one of the following:
(1) a DMRS port corresponding to any antenna group in a plurality of antenna groups and a number of CDM groups without data;
(2) a DMRS port corresponding to any antenna group in a plurality of antenna groups, a number of transport layers corresponding to the antenna group, and a number of CDM groups without data;
(3) a DMRS port corresponding to any antenna group in a plurality of antenna groups, a number of symbols occupied by a front-load DMRS, and a number of CDM groups without data; and
(4) a DMRS port corresponding to any antenna group in a plurality of antenna groups, a number of transport layers corresponding to the antenna group, a number of symbols occupied by a front-load DMRS, and a number of CDM groups without data.

Other indication information, that is, indication information other than the piece of indication information in the plurality of pieces of indication information, may indicate any one of the following:
(1) a DMRS port corresponding to any antenna group in a plurality of antenna groups;
(2) a number of DMRS ports corresponding to any antenna group in a plurality of antenna groups is 0;
(3) a DMRS port corresponding to any antenna group in a plurality of antenna groups and a number of transport layers corresponding to the antenna group;
(4) a number of DMRS ports corresponding to any antenna group in a plurality of antenna groups and a number of transport layers corresponding to the antenna group are 0;
(5) a DMRS port corresponding to any antenna group in a plurality of antenna groups and a number of symbols occupied by a front-load DMRS;
(6) a number of DMRS ports corresponding to any antenna group in a plurality of antenna groups is 0, and a number of symbols occupied by a front-load DMRS;
(7) a DMRS port corresponding to any antenna group in a plurality of antenna groups, a number of transport layers corresponding to the antenna group, and a number of symbols occupied by a front-load DMRS; and
(8) a number of DMRS ports corresponding to any antenna group in a plurality of antenna groups and a number of transport layers corresponding to the antenna group are 0, and a number of symbols occupied by a front-load DMRS.

Case 3: One piece of indication information is separately introduced to indicate the number of CDM groups without data, and the indication information may be referred to as first indication information.

In this case, for content indicated by any one of the plurality of pieces of information, refer to content indicated by other indication information in Case 2. Details are not described herein again.

For ease of understanding, the following uses an example in which the number of pieces of indication information is 2 (correspondingly, the number of receive antenna groups of the terminal device is 2), that is, the plurality of pieces of indication information include second indication information and third indication information for specific description.

The second indication information may indicate an identifier of first information, the first information is any one of a plurality of pieces of first information, the first information indicates a DMRS port corresponding to a first antenna group, and the DMRS port corresponding to the first antenna group is at least one of DMRS ports corresponding to a first CDM group.

The third indication information may indicate an identifier of second information, the second information is any one of a plurality of pieces of second information, the second information indicates a DMRS port corresponding to a second antenna group, and the DMRS port corresponding to the second antenna group is at least one of DMRS ports corresponding to a second CDM group.

The first antenna group may be any one of two receive antenna groups of the terminal device, and the second antenna group may be an antenna group other than the first antenna group in the two receive antenna groups of the terminal device.

In a possible implementation, the first CDM group may be any CDM group in DMRS configuration type 1, and the second CDM group may be a CDM group other than the first CDM group in DMRS configuration type 1.

For example, the first CDM group may be CDM group 0 in DMRS configuration type 1, and the second CDM group may be CDM group 1 in DMRS configuration type 1.

In this example, the DMRS port corresponding to the first antenna group may be at least one of DMRS ports corresponding to CDM group 0 in DMRS configuration type 1, and the DMRS port corresponding to the second antenna group may be at least one of DMRS ports corresponding to CDM group 1 in DMRS configuration type 1.

For another example, the first CDM group may be CDM group 1 in DMRS configuration type 1, and the second CDM group may be CDM group 0 in DMRS configuration type 1.

In this example, the DMRS port corresponding to the first antenna group may be at least one of DMRS ports corresponding to CDM group 1 in DMRS configuration type 1, and the DMRS port corresponding to the second antenna group may be at least one of DMRS ports corresponding to CDM group 0 in DMRS configuration type 1.

In this implementation, a plurality of pieces of first information and a plurality of pieces of second information may be described in the following three cases.

Case 1: Some information in the plurality of pieces of first information indicates the DMRS port corresponding to the first antenna group, and some information indicates whether the CDM group corresponding to the first antenna group is occupied, that is, any one of the plurality of pieces of first information indicates the DMRS port corresponding to the first antenna group, or whether the CDM group corresponding to the first antenna group is occupied; and some information in the plurality of pieces of second information indicates the DMRS port corresponding to the second antenna group, and some information indicates whether the CDM group corresponding to the second antenna group is occupied, that is, any one of the plurality of pieces of second information indicates the DMRS port corresponding to the second antenna group, or whether the CDM group corresponding to the second antenna group is occupied.

The plurality of pieces of first information may be shown in Table 3, and the plurality of pieces of second information may be shown in Table 4.

**Table 3 DMRS port index indication of a first antenna group for DMRS configuration type 1 (1^{st} Antenna port (s) (1000+DMRS port), dmrs-Type=1, maxLength=2)**

| Bit field value | DMRS port | Number of symbols occupied by a front-loaded DMRS |
|---|---|---|
| 0 | 0 | 1 |
| 1 | 1 | 1 |
| 2 | 0, 1 | 1 |
| 3 | 0 | 2 |
| 4 | 1 | 2 |
| 5 | 4 | 2 |
| 6 | 5 | 2 |
| 7 | 0, 1 | 2 |
| 8 | 4, 5 | 2 |
| 9 | 0, 4 | 2 |
| 10 | 0, 1, 4 | 2 |
| 11 | 0, 1, 4, 5 | 2 |
| 12 | Reserved but none | 1 |
| 13 | Reserved but none | 2 |
| 14 | Not reserved | 1 |
| 15 | Not reserved | 2 |

Each piece of second indication information may indicate a bit field value in Table 3. "Reserved but none" indicates that the CDM group corresponding to the first antenna group is occupied, that is, a corresponding time-frequency resource does not transmit data, and no DMRS port in the CDM group is used. "Not reserved" indicates that the CDM group corresponding to the first antenna group is not occupied, that is, a corresponding time-frequency resource may be used to transmit data.

**Table 4 DMRS port index indication of a second antenna group for DMRS configuration type 1 (2^{nd} Antenna port (s) (1000+DMRS port), dmrs-Type=1, maxLength=2)**

| Bit field value | DMRS port | Number of symbols occupied by a front-loaded DMRS |
|---|---|---|
| 0 | 2 | 1 |
| 1 | 3 | 1 |
| 2 | 2, 3 | 1 |
| 3 | 2 | 2 |
| 4 | 3 | 2 |
| 5 | 6 | 2 |
| 6 | 7 | 2 |
| 7 | 2, 3 | 2 |
| 8 | 6, 7 | 2 |
| 9 | 2, 6 | 2 |
| 10 | 2, 3, 6 | 2 |
| 11 | 2, 3, 6, 7 | 2 |
| 12 | Reserved but none | 1 |
| 13 | Reserved but none | 2 |
| 14 | Not reserved | 1 |
| 15 | Not reserved | 2 |

Each piece of third indication information may indicate a bit field value in Table 4. "Reserved but none" indicates that the CDM group corresponding to the second antenna group is occupied, that is, a corresponding time-frequency resource does not transmit data, and no DMRS port in the CDM group is used. "Not reserved" indicates that the CDM group corresponding to the second antenna group is not occupied, that is, a corresponding time-frequency resource may be used to transmit data.

It should be noted that Table 3 and Table 4 are merely examples. Table 3 may alternatively be a DMRS port index indication of the second antenna group when DMRS configuration type 1 is used, and Table 4 may alternatively be a DMRS port index indication of the first antenna group when DMRS configuration type 1 is used. The DMRS port index indication when DMRS configuration type 1 is used may alternatively be a part in Table 3 or Table 4. Table 3 or a part in Table 3 may be combined with Table 4, Table 3 or a part in Table 3 may alternatively be combined with a part in Table 4, and a combined table may alternatively be combined with another table (for example, an existing DMRS port index indication table) or content. Table 3 or a part in Table 3 may alternatively be combined with another table or content, Table 4 or a part in Table 4 may alternatively be combined with another table or content, and specific forms of Table 3 and Table 4 are not limited in this application. As long as at least one of Table 3, a part in Table 3, Table 4, or a part in Table 4 is included, it is a protection object of this application.

Case 2: Any one of the plurality of pieces of first information indicates the DMRS port corresponding to the first antenna group and the number of CDM groups without data, and any one of the plurality of pieces of second information indicates the DMRS port corresponding to the second antenna group; or any one of the plurality of pieces of first information indicates the DMRS port corresponding to the first antenna group, and any one of the plurality of pieces of second information indicates the DMRS port corresponding to the second antenna group and the number of CDM groups without data.

The plurality of pieces of first information may be shown in Table 5, and the plurality of pieces of second information may be shown in Table 6.

**Table 5 DMRS port index indication of a first antenna group for DMRS configuration type 1 (1^{st} Antenna port (s) (1000+DMRS port), dmrs-Type=1, maxLength=2)**

| Bit field value | DMRS port | Number of symbols occupied by a front-loaded DMRS | Number of CDM groups without data |
|---|---|---|---|
| 0 | 0 | 1 | 1 |
| 1 | 1 | 1 | 1 |
| 2 | 0, 1 | 1 | 1 |
| 3 | 0 | 2 | 1 |
| 4 | 1 | 2 | 1 |
| 5 | 4 | 2 | 1 |
| 6 | 5 | 2 | 1 |
| 7 | 0, 1 | 2 | 1 |
| 8 | 4, 5 | 2 | 1 |
| 9 | 0, 4 | 2 | 1 |
| 10 | 0, 1, 4 | 2 | 1 |
| 11 | 0, 1, 4, 5 | 2 | 1 |
| 12 | None | 1 | 1 |
| 13 | None | 2 | 1 |
| 14 | 0 | 1 | 2 |
| 15 | 1 | 1 | 2 |
| 16 | 0, 1 | 1 | 2 |
| 17 | 0 | 2 | 2 |
| 18 | 1 | 2 | 2 |
| 19 | 4 | 2 | 2 |
| 20 | 5 | 2 | 2 |
| 21 | 0, 1 | 2 | 2 |
| 22 | 4, 5 | 2 | 2 |
| 23 | 0, 4 | 2 | 2 |
| 24 | 0, 1, 4 | 2 | 2 |
| 25 | 0, 1, 4, 5 | 2 | 2 |
| 26 | None | 1 | 2 |
| 27 | None | 2 | 2 |

Each piece of second indication information may indicate a bit field value in Table 5. "None" indicates that no DMRS port is indicated, that is, the number of DMRS ports corresponding to the first antenna group is 0.

**Table 6 DMRS port index indication of a second antenna group for DMRS configuration type 1 (2^{nd} Antenna port (s) (1000+DMRS port), dmrs-Type=1, maxLength=2)**

| Bit field value | DMRS port | Number of symbols occupied by a front-loaded DMRS |
|---|---|---|
| 0 | 2 | 1 |
| 1 | 3 | 1 |
| 2 | 2, 3 | 1 |
| 3 | 2 | 2 |
| 4 | 3 | 2 |
| 5 | 6 | 2 |
| 6 | 7 | 2 |
| 7 | 2, 3 | 2 |
| 8 | 6, 7 | 2 |
| 9 | 2, 6 | 2 |
| 10 | 2, 3, 6 | 2 |
| 11 | 2, 3, 6, 7 | 2 |
| 12 | None | 1 |
| 13 | None | 2 |

Each piece of third indication information may indicate a bit field value in Table 6. "None" indicates that no DMRS port is indicated, that is, the number of DMRS ports corresponding to the second antenna group is 0.

The second indication information and the third indication information cannot simultaneously indicate "none". When the number of CDM groups without data in Table 5 is 1, one piece of indication information in the second indication information and the third indication information needs to indicate "none".

It should be noted that Table 5 and Table 6 are merely examples. Table 5 may alternatively be a DMRS port index indication of the second antenna group when DMRS configuration type 1 is used, and Table 6 may alternatively be a DMRS port index indication of the first antenna group when DMRS configuration type 1 is used. The DMRS port index indication when DMRS configuration type 1 is used may alternatively be a part in Table 5 or Table 6. Table 5 or a part in Table 5 may be combined with Table 6, Table 5 or a part in Table 5 may alternatively be combined with a part in Table 6, and a combined table may alternatively be combined with another table (for example, an existing DMRS port index indication table) or content. Table 5 or a part in Table 5 may alternatively be combined with another table or content, Table 6 or a part in Table 6 may alternatively be combined with another table or content, and specific forms of Table 5 and Table 6 are not limited in this application. As long as at least one of Table 5, a part in Table 5, Table 6, or a part in Table 6 is included, it is a protection object of this application.

Case 3: The first indication information is introduced to indicate the number of CDM groups without data, and the second indication information indicates the DMRS port corresponding to the first antenna group, or indicates that the number of DMRS ports corresponding to the first antenna group is 0; and the third indication information indicates the DMRS port corresponding to the second antenna group, or indicates that the number of DMRS ports corresponding to the first antenna group is 0.

The number of DMRS ports corresponding to the first antenna group and the number of DMRS ports corresponding to the second antenna group are not both 0.

The number of CDM groups without data may be shown in Table 7, the plurality of pieces of first information may be shown in Table 8, and the plurality of pieces of second information may be shown in Table 6.

**Table 7 Number of CDM groups without data**

| Bit field value | Number of CDM groups without data |
|---|---|
| 0 | 1 |
| 1 | 2 |
| 2 | 3 |
| 3 | Reserved |

The first indication information may indicate a bit field value in Table 7.

**Table 8 DMRS port index indication of a first antenna group for DMRS configuration type 1 (1^{st} Antenna port (s) (1000+DMRS port), dmrs-Type=1, maxLength=2)**

| Bit field value | DMRS port | Number of symbols occupied by a front-loaded DMRS |
|---|---|---|
| 0 | 0 | 1 |
| 1 | 1 | 1 |
| 2 | 0, 1 | 1 |
| 3 | 0 | 2 |
| 4 | 1 | 2 |
| 5 | 4 | 2 |
| 6 | 5 | 2 |
| 7 | 0, 1 | 2 |
| 8 | 4, 5 | 2 |
| 9 | 0, 4 | 2 |
| 10 | 0, 1, 4 | 2 |
| 11 | 0, 1, 4, 5 | 2 |
| 12 | None | 1 |
| 13 | None | 2 |

Each piece of second indication information may indicate a bit field value in Table 8. "None" indicates that no DMRS port is indicated, that is, the number of DMRS ports corresponding to the first antenna group is 0.

When the number of CDM groups without data in Table 7 is 1, the second indication information and the third indication information cannot simultaneously indicate "none"; and when the number of CDM groups without data in Table 7 is 2, neither the second indication information nor the third indication information can indicate "none".

It should be noted that Table 7, Table 8, and Table 6 are merely examples. Table 8 may alternatively be a DMRS port index indication of the second antenna group when DMRS configuration type 1 is used, and Table 6 may alternatively be a DMRS port index indication of the first antenna group when DMRS configuration type 1 is used. The DMRS port index indication when DMRS configuration type 1 is used may alternatively be a part in Table 8 or Table 6. Table 8 or a part in Table 8 may be combined with Table 6, Table 8 or a part in Table 8 may alternatively be combined with a part in Table 6, and a combined table may alternatively be combined with another table (for example, an existing DMRS port index indication table) or content. Table 8 or a part in Table 8 may alternatively be combined with another table or content, Table 6 or a part in Table 6 may alternatively be combined with another table or content, and specific forms of Table 8 and Table 6 are not limited in this application. As long as at least one of Table 8, a part in Table 8, Table 6, or a part in Table 6 is included, it is a protection object of this application.

In a possible implementation, the first CDM group may be any CDM group in DMRS configuration type 2, and the second CDM group may be any CDM group other than the first CDM group in DMRS configuration type 2.

For example, the first CDM group may be CDM group 0 in DMRS configuration type 2, and the second CDM group may be CDM group 1 or 2 in DMRS configuration type 2.

In this example, the DMRS port corresponding to the first antenna group may be at least one of DMRS ports corresponding to CDM group 0 in DMRS configuration type 2; and the DMRS port corresponding to the second antenna group may be at least one of DMRS ports corresponding to CDM group 1 in DMRS configuration type 2, or the DMRS port corresponding to the second antenna group may be at least one of DMRS ports corresponding to CDM group 2 in DMRS configuration type 2.

For another example, the first CDM group may be CDM group 1 in DMRS configuration type 2, and the second CDM group may be CDM group 0 or 2 in DMRS configuration type 2.

In this example, the DMRS port corresponding to the first antenna group may be at least one of DMRS ports corresponding to CDM group 1 in DMRS configuration type 2; and the DMRS port corresponding to the second antenna group may be at least one of DMRS ports corresponding to CDM group 0 in DMRS configuration type 2, or the DMRS port corresponding to the second antenna group may be at least one of DMRS ports corresponding to CDM group 2 in DMRS configuration type 2.

For still another example, the first CDM group may be CDM group 2 in DMRS configuration type 2, and the second CDM group may be CDM group 0 or 1 in DMRS configuration type 2.

In this example, the DMRS port corresponding to the first antenna group may be at least one of DMRS ports corresponding to CDM group 2 in DMRS configuration type 2; and the DMRS port corresponding to the second antenna group may be at least one of DMRS ports corresponding to CDM group 0 in DMRS configuration type 2, or the DMRS port corresponding to the second antenna group may be at least one of DMRS ports corresponding to CDM group 1 in DMRS configuration type 2.

In this implementation, a plurality of pieces of first information and a plurality of pieces of second information may be described in the following three cases.

Case 1: Some information in the plurality of pieces of first information indicates the DMRS port corresponding to the first antenna group, and some information indicates whether the CDM group corresponding to the first antenna group is occupied, that is, any one of the plurality of pieces of first information indicates the DMRS port corresponding to the first antenna group, or whether the CDM group corresponding to the first antenna group is occupied; and some information in the plurality of pieces of second information indicates the DMRS port corresponding to the second antenna group, and some information indicates whether the CDM group corresponding to the second antenna group is occupied, that is, any one of the plurality of pieces of second information indicates the DMRS port corresponding to the second antenna group, or whether the CDM group corresponding to the second antenna group is occupied.

The plurality of pieces of first information and the plurality of pieces of second information may be respectively shown in any two of Table 9, Table 10, or Table 11. For example, the plurality of pieces of first information may be shown in Table 9, and the plurality of pieces of second information may be shown in Table 10; or the plurality of pieces of first information are shown in Table 9, and the plurality of pieces of second information may be shown in Table 11; or the plurality of pieces of first information are shown in Table 10, and the plurality of pieces of second information are shown in Table 9; or the plurality of pieces of first information are shown in Table 10, and the plurality of pieces of second information are shown in Table 11; or the plurality of pieces of first information are shown in Table 11, and the plurality of pieces of second information are shown in Table 9; or the plurality of pieces of first information are shown in Table 11, and the plurality of pieces of second information are shown in Table 10.

**Table 9 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS |
|---|---|---|
| 0 | 0 | 1 |
| 1 | 1 | 1 |
| 2 | 0, 1 | 1 |
| 3 | 0 | 2 |
| 4 | 1 | 2 |
| 5 | 6 | 2 |
| 6 | 7 | 2 |
| 7 | 0, 1 | 2 |
| 8 | 6, 7 | 2 |
| 9 | 0, 6 | 2 |
| 10 | 0, 1, 6 | 2 |
| 11 | 0, 1, 6, 7 | 2 |
| 12 | Reserved but none | 1 |
| 13 | Reserved but none | 2 |
| 14 | Not reserved | 1 |
| 15 | Not reserved | 2 |

Each piece of second indication information or each piece of third indication information may indicate a bit field value in Table 9. "Reserved but none" indicates that the CDM group corresponding to the antenna group is occupied, that is, a corresponding time-frequency resource does not transmit data, and no DMRS port in the CDM group is used. "Not reserved" indicates that the CDM group corresponding to the antenna group is not occupied, that is, a corresponding time-frequency resource may be used to transmit data.

**Table 10 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS |
|---|---|---|
| 0 | 2 | 1 |
| 1 | 3 | 1 |
| 2 | 2, 3 | 1 |
| 3 | 2 | 2 |
| 4 | 3 | 2 |
| 5 | 8 | 2 |
| 6 | 9 | 2 |
| 7 | 2, 3 | 2 |
| 8 | 8, 9 | 2 |
| 9 | 2, 8 | 2 |
| 10 | 2, 3, 8 | 2 |
| 11 | 2, 3, 8, 9 | 2 |
| 12 | Reserved but none | 1 |
| 13 | Reserved but none | 2 |
| 14 | Not reserved | 1 |
| 15 | Not reserved | 2 |

Each piece of second indication information or each piece of third indication information may indicate a bit field value in Table 10. "Reserved but none" indicates that the CDM group corresponding to the antenna group is occupied, that is, a corresponding time-frequency resource does not transmit data, and no DMRS port in the CDM group is used. "Not reserved" indicates that the CDM group corresponding to the antenna group is not occupied, that is, a corresponding time-frequency resource may be used to transmit data.

**Table 11 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS |
|---|---|---|
| 0 | 4 | 1 |
| 1 | 5 | 1 |
| 2 | 4, 5 | 1 |
| 3 | 4 | 2 |
| 4 | 5 | 2 |
| 5 | 10 | 2 |
| 6 | 11 | 2 |
| 7 | 4, 5 | 2 |
| 8 | 10, 11 | 2 |
| 9 | 4, 10 | 2 |
| 10 | 4, 5, 10 | 2 |
| 11 | 4, 5, 10, 11 | 2 |
| 12 | Reserved but none | 1 |
| 13 | Reserved but none | 2 |
| 14 | Not reserved | 1 |
| 15 | Not reserved | 2 |

Each piece of second indication information or each piece of third indication information may indicate a bit field value in Table 10. "Reserved but none" indicates that the CDM group corresponding to the antenna group is occupied, that is, a corresponding time-frequency resource does not transmit data, and no DMRS port in the CDM group is used. "Not reserved" indicates that the CDM group corresponding to the antenna group is not occupied, that is, a corresponding time-frequency resource may be used to transmit data.

It should be noted that Table 9, Table 10, and Table 11 are merely examples, and a DMRS port index indication when DMRS configuration type 2 is used may alternatively be a part in Table 9, Table 10, or Table 11. Table 9, Table 10, and Table 11 may be combined; a part in Table 9, Table 10, and Table 11 may be combined; Table 9, a part in Table 10, and Table 11 may be combined; a part in Table 9, a part in Table 10, and Table 11 may be combined; Table 9, Table 10, and a part in Table 11 may be combined; a part in Table 9, Table 10, and a part in Table 11 may be combined; Table 9, a part in Table 10, and a part in Table 11 may be combined; and a part in Table 9, a part in Table 10, and a part in Table 11 may be combined. A combined table may alternatively be combined with another table (for example, an existing DMRS port index indication table) or content. Table 9 or a part in Table 9 may alternatively be combined with another table or content, Table 10 or a part in Table 10 may alternatively be combined with another table or content, and Table 11 or a part in Table 11 may alternatively be combined with another table or content. Specific forms of Table 9, Table 10, and Table 11 are not limited in this application. As long as at least one of Table 9, a part in Table 9, Table 10, a part in Table 10, Table 11, or a part in Table 11 is included, it is a protection object of this application.

In this case, whether a 3^{rd} CDM group is occupied may be configured by radio resource control (radio resource control, RRC) or predefined in a protocol. The 3^{rd} CDM group refers to an antenna group other than the CDM group corresponding to the first antenna group and the CDM group corresponding to the second antenna group.

Case 2: Any one of the plurality of pieces of first information indicates the DMRS port corresponding to the first antenna group and the number of CDM groups without data, and any one of the plurality of pieces of second information indicates the DMRS port corresponding to the second antenna group; or any one of the plurality of pieces of first information indicates the DMRS port corresponding to the first antenna group, and any one of the plurality of pieces of second information indicates the DMRS port corresponding to the second antenna group and the number of CDM groups without data.

The plurality of pieces of first information may be shown in Table 12, and the plurality of pieces of second information may be shown in Table 13 or Table 14. Alternatively, the plurality of pieces of second information may be shown in Table 12, and the plurality of pieces of first information may be shown in Table 13 or Table 14.

**Table 12 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS | Number of CDM groups without data |
|---|---|---|---|
| 0 | 0 | 1 | 1 |
| 1 | 1 | 1 | 1 |
| 2 | 0, 1 | 1 | 1 |
| 3 | 0 | 2 | 1 |
| 4 | 1 | 2 | 1 |
| 5 | 6 | 2 | 1 |
| 6 | 7 | 2 | 1 |
| 7 | 0, 1 | 2 | 1 |
| 8 | 6, 7 | 2 | 1 |
| 9 | 0, 6 | 2 | 1 |
| 10 | 0, 1, 6 | 2 | 1 |
| 11 | 0, 1, 6, 7 | 2 | 1 |
| 12 | None | 1 | 1 |
| 13 | None | 2 | 1 |
| 14 | 0 | 1 | 2 |
| 15 | 1 | 1 | 2 |
| 16 | 0, 1 | 1 | 2 |
| 17 | 0 | 2 | 2 |
| 18 | 1 | 2 | 2 |
| 19 | 6 | 2 | 2 |
| 20 | 7 | 2 | 2 |
| 21 | 0, 1 | 2 | 2 |
| 22 | 6, 7 | 2 | 2 |
| 23 | 0, 6 | 2 | 2 |
| 24 | 0, 1, 6 | 2 | 2 |
| 25 | 0, 1, 6, 7 | 2 | 2 |
| 26 | None | 1 | 2 |
| 27 | None | 2 | 2 |
| 28 | 0 | 1 | 3 |
| 29 | 1 | 1 | 3 |
| 30 | 0, 1 | 1 | 3 |
| 31 | 0 | 2 | 3 |
| 32 | 1 | 2 | 3 |
| 33 | 6 | 2 | 3 |
| 34 | 7 | 2 | 3 |
| 35 | 0, 1 | 2 | 3 |
| 36 | 6, 7 | 2 | 3 |
| 37 | 0, 6 | 2 | 3 |
| 38 | 0, 1, 6 | 2 | 3 |
| 39 | 0, 1, 6, 7 | 2 | 3 |
| 40 | None | 1 | 3 |
| 41 | None | 2 | 3 |

Each piece of second indication information or each piece of third indication information may indicate a bit field value in Table 12. "None" indicates that no DMRS port is indicated, that is, the number of DMRS ports corresponding to the antenna group is 0.

**Table 13 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS |
|---|---|---|
| 0 | 2 | 1 |
| 1 | 3 | 1 |
| 2 | 2, 3 | 1 |
| 3 | 2 | 2 |
| 4 | 3 | 2 |
| 5 | 8 | 2 |
| 6 | 9 | 2 |
| 7 | 2, 3 | 2 |
| 8 | 8, 9 | 2 |
| 9 | 2, 8 | 2 |
| 10 | 2, 3, 8 | 2 |
| 11 | 2, 3, 8, 9 | 2 |
| 12 | None | 1 |
| 13 | None | 2 |

Each piece of second indication information or each piece of third indication information may indicate a bit field value in Table 13. "None" indicates that no DMRS port is indicated, that is, the number of DMRS ports corresponding to the antenna group is 0.

**Table 14 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS |
|---|---|---|
| 0 | 4 | 1 |
| 1 | 5 | 1 |
| 2 | 4, 5 | 1 |
| 3 | 4 | 2 |
| 4 | 5 | 2 |
| 5 | 10 | 2 |
| 6 | 11 | 2 |
| 7 | 4, 5 | 2 |
| 8 | 10, 11 | 2 |
| 9 | 4, 10 | 2 |
| 10 | 4, 5, 10 | 2 |
| 11 | 4, 5, 10, 11 | 2 |
| 12 | None | 1 |
| 13 | None | 2 |

Each piece of second indication information or each piece of third indication information may indicate a bit field value in Table 14. "None" indicates that no DMRS port is indicated, that is, the number of DMRS ports corresponding to the antenna group is 0.

The second indication information and the third indication information cannot simultaneously indicate "none". When the number of CDM groups without data in Table 12 is 1, one piece of indication information in the second indication information and the third indication information needs to indicate "none".

It should be noted that Table 12, Table 13, and Table 14 are merely examples, and a DMRS port index indication when DMRS configuration type 2 is used may alternatively be a part that is in Table 12, Table 13, and Table 14. Table 12, Table 13, and Table 14 may be combined; a part in Table 12, Table 13, and Table 14 may be combined; Table 12, a part in Table 13, and Table 14 may be combined; a part in Table 12, a part in Table 13, and Table 14 may be combined; Table 12, Table 13, and a part in Table 14 may be combined; a part in Table 12, Table 13, and a part in Table 14 may be combined; Table 12, a part in Table 13, and a part in Table 14 may be combined; and a part in Table 12, a part in Table 13, and a part in Table 14 may be combined. A combined table may alternatively be combined with another table (for example, an existing DMRS port index indication table) or content. Table 12 or a part in Table 12 may alternatively be combined with another table or content, Table 13 or a part in Table 13 may alternatively be combined with another table or content, and Table 14 or a part in Table 14 may alternatively be combined with another table or content. Specific forms of Table 12, Table 13, and Table 14 are not limited in this application. As long as at least one of Table 12, a part in Table 12, Table 13, a part in Table 13, Table 14, or a part in Table 14 is included, it is a protection object of this application.

Case 3: The first indication information is introduced to indicate the number of CDM groups without data, and the second indication information indicates the DMRS port corresponding to the first antenna group, or indicates that the number of DMRS ports corresponding to the first antenna group is 0; and the third indication information indicates the DMRS port corresponding to the second antenna group, or indicates that the number of DMRS ports corresponding to the first antenna group is 0.

The number of DMRS ports corresponding to the first antenna group and the number of DMRS ports corresponding to the second antenna group are not both 0.

The number of CDM groups without data may be shown in Table 7, and the plurality of pieces of first information and the plurality of pieces of second information may be respectively shown in any two of Table 15, Table 13, or Table 14. For example, the plurality of pieces of first information may be shown in Table 15, and the plurality of pieces of second information may be shown in Table 13; or the plurality of pieces of first information are shown in Table 15, and the plurality of pieces of second information may be shown in Table 14; or the plurality of pieces of first information are shown in Table 13, and the plurality of pieces of second information are shown in Table 15; or the plurality of pieces of first information are shown in Table 13, and the plurality of pieces of second information are shown in Table 14; or the plurality of pieces of first information are shown in Table 14, and the plurality of pieces of second information are shown in Table 15; or the plurality of pieces of first information are shown in Table 14, and the plurality of pieces of second information are shown in Table 13.

**Table 15 DMRS port index indication of an antenna group for DMRS configuration type 2 (Antenna port (s) (1000+DMRS port), dmrs-Type=1, maxLength=2)**

| Bit field value | DMRS port | Number of symbols occupied by a front-loaded DMRS |
|---|---|---|
| 0 | 0 | 1 |
| 1 | 1 | 1 |
| 2 | 0, 1 | 1 |
| 3 | 0 | 2 |
| 4 | 1 | 2 |
| 5 | 6 | 2 |
| 6 | 7 | 2 |
| 7 | 0, 1 | 2 |
| 8 | 6, 7 | 2 |
| 9 | 0, 6 | 2 |
| 10 | 0, 1, 6 | 2 |
| 11 | 0, 1, 6, 7 | 2 |
| 12 | None | 1 |
| 13 | None | 2 |

Each piece of second indication information or each piece of third indication information may indicate a bit field value in Table 15. "None" indicates that no DMRS port is indicated, that is, the number of DMRS ports corresponding to the antenna group is 0.

It should be noted that Table 15, Table 13, and Table 14 are merely examples, and a DMRS port index indication when DMRS configuration type 2 is used may alternatively be a part that is in Table 15, Table 13, and Table 14. Table 15, Table 13, and Table 14 may be combined; a part in Table 15, Table 13, and Table 14 may be combined; Table 15, a part in Table 13, and Table 14 may be combined; a part in Table 15, a part in Table 13, and Table 14 may be combined; Table 15, Table 13, and a part in Table 14 may be combined; a part in Table 15, Table 13, and a part in Table 14 may be combined; Table 15, a part in Table 13, and a part in Table 14 may be combined; and a part in Table 15, a part in Table 13, and a part in Table 14 may be combined. A combined table may alternatively be combined with another table (for example, an existing DMRS port index indication table) or content. Table 15 or a part in Table 15 may alternatively be combined with another table or content, Table 13 or a part in Table 13 may alternatively be combined with another table or content, and Table 14 or a part in Table 14 may alternatively be combined with another table or content. Specific forms of Table 15, Table 13, and Table 14 are not limited in this application. As long as at least one of Table 15, a part in Table 15, Table 13, a part in Table 13, Table 14, or a part in Table 14 is included, it is a protection object of this application.

S502: The network device sends the plurality of pieces of indication information to the terminal device.

In other words, the terminal device receives the plurality of pieces of indication information sent by the network device.

It should be noted that, in this embodiment of this application, baseband processing function modules of different antenna groups of the terminal device are different. That is, a type of the receiver of the terminal device in this embodiment of this application is Type 1.

The plurality of pieces of indication information may be carried in downlink control information (downlink control information, DCI), a medium access control (media access control, MAC) control element (control element, CE), or an RRC message. This is not limited in this application.

For example, if the plurality of pieces of indication information include the second indication information and the third indication information, the second indication information may be carried in a first antenna port field of the DCI, and the third indication information may be carried in a second antenna port field of the DCI.

When the indication manner of Case 3 in S501 is used to indicate the number of CDM groups without data, S503 may be further performed.

S503: The network device sends first indication information to the terminal device.

In other words, the terminal device receives the first indication information sent by the network device.

The first indication information may be carried in DCI, a MAC CE, or an RRC message. This is not limited in this application.

After receiving the plurality of pieces of indication information, the terminal device may determine, based on the plurality of pieces of indication information, a corresponding DMRS port on each antenna group, and then receive, by using the antenna group, a DMRS transmitted on the corresponding DMRS port.

In the embodiment shown in FIG. 5, because a DMRS port corresponding to each antenna group belongs to a same CDM group, and DMRS ports corresponding to different antenna groups belong to different CDM groups, impact of interference between antenna groups on channel estimation may be reduced. In addition, interference strength caused by other antenna groups may further be accurately estimated on each antenna group. In this way, interference between antenna groups may be more effectively suppressed in MIMO equalization processing, thereby improving performance.

FIG. 6 is a schematic diagram of a structure of a communication apparatus according to an embodiment of this application. As shown in FIG. 6, the communication apparatus 600 includes: a receiving module 601, configured to: receive a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and when the information indicates the DMRS port corresponding to the antenna group, the information further indicates a number of CDM groups without data, or receive first indication information, where the first indication information indicates a number of CDM groups without data.

In a possible implementation, the information further indicates a number of transport layers corresponding to the antenna group.

In a possible implementation, a number of transport layers corresponding to an antenna group is the same as a number of DMRS ports corresponding to the antenna group.

In a possible implementation, the information further indicates a number of symbols occupied by a front-loaded DMRS.

In a possible implementation, different antenna groups have different function modules for baseband processing.

In a possible implementation, the plurality of pieces of indication information include second indication information and third indication information, the second indication information indicates an identifier of first information, and the third indication information indicates an identifier of second information, where the first information is any information in a plurality of pieces of first information, the first information indicates a DMRS port corresponding to a first antenna group, and the DMRS port corresponding to the first antenna group is at least one of DMRS ports corresponding to a first CDM group; and the second information is any information in a plurality of pieces of second information, the second information indicates a DMRS port corresponding to a second antenna group, and the DMRS port corresponding to the second antenna group is at least one of DMRS ports corresponding to a second CDM group.

In a possible implementation, the first CDM group is any CDM group in DMRS configuration type 1; and the second CDM group is a CDM group other than the first CDM group in DMRS configuration type 1.

In a possible implementation, the first CDM group is any CDM group in DMRS configuration type 2; and the second CDM group is any CDM group other than the first CDM group in DMRS configuration type 2.

In a possible implementation, the plurality of pieces of indication information are carried in DCI, a MAC CE, or an RRC message.

In a possible implementation, the first indication information is carried in DCI, a MAC CE, or an RRC message.

In a possible implementation, the plurality of antenna groups are receive antenna groups of a terminal device.

The communication apparatus 600 provided in this embodiment is configured to implement the technical solutions of the terminal device in the foregoing method embodiment. Implementation principles and technical effects thereof are similar, and details are not described herein again.

FIG. 7 is a schematic diagram of a structure of another communication apparatus according to an embodiment of this application. As shown in FIG. 7, the communication apparatus 700 includes: a determining module 701, configured to determine a plurality of pieces of indication information, where each piece of indication information indicates an identifier of information, the information is any information in a plurality of pieces of information, the information indicates whether a DMRS port corresponding to any antenna group in a plurality of antenna groups or a CDM group corresponding to the antenna group is occupied, the DMRS port corresponding to the antenna group belongs to a same CDM group, and DMRS ports corresponding to different antenna groups belong to different CDM groups; and a sending module 702, configured to: send the plurality of pieces of indication information, where when the information indicates the DMRS port corresponding to the antenna group, the information further indicates a number of CDM groups without data, or send first indication information, where the first indication information indicates a number of CDM groups without data.

In a possible implementation, the information further indicates a number of transport layers corresponding to the antenna group.

In a possible implementation, a number of transport layers corresponding to an antenna group is the same as a number of DMRS ports corresponding to the antenna group.

In a possible implementation, the information further indicates a number of symbols occupied by a front-loaded DMRS.

In a possible implementation, different antenna groups have different function modules for baseband processing.

In a possible implementation, the plurality of pieces of indication information include second indication information and third indication information, the second indication information indicates an identifier of first information, and the third indication information indicates an identifier of second information, where the first information is any information in a plurality of pieces of first information, the first information indicates a DMRS port corresponding to a first antenna group, and the DMRS port corresponding to the first antenna group is at least one of DMRS ports corresponding to a first CDM group; and the second information is any information in a plurality of pieces of second information, the second information indicates a DMRS port corresponding to a second antenna group, and the DMRS port corresponding to the second antenna group is at least one of DMRS ports corresponding to a second CDM group.

In a possible implementation, the first CDM group is any CDM group in DMRS configuration type 1; and the second CDM group is a CDM group other than the first CDM group in DMRS configuration type 1.

In a possible implementation, the first CDM group is any CDM group in DMRS configuration type 2; and the second CDM group is any CDM group other than the first CDM group in DMRS configuration type 2.

In a possible implementation, the plurality of pieces of indication information are carried in DCI, a MAC CE, or an RRC message.

In a possible implementation, the first indication information is carried in DCI, a MAC CE, or an RRC message.

In a possible implementation, the plurality of antenna groups are receive antenna groups of a terminal device.

The communication apparatus 700 provided in this embodiment is configured to implement the technical solutions of the network device in the foregoing method embodiment. Implementation principles and technical effects thereof are similar, and details are not described herein again.

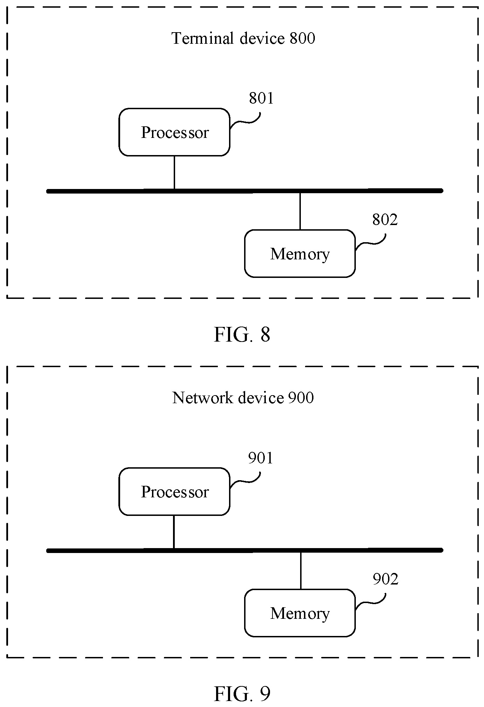

FIG. 8 is a schematic diagram of a structure of a terminal device according to an embodiment of this application. As shown in FIG. 8, a terminal device 800, including: a processor 801 and a memory 802. The memory 802 stores computer-executable instructions. The processor 801 executes the computer-executable instructions stored in the memory 802, so that the terminal device executes the corresponding technical solutions in the foregoing method embodiment. Implementation principles and technical effects thereof are similar, and details are not described herein again.

FIG. 9 is a schematic diagram of a structure of a network device according to an embodiment of this application. As shown in FIG. 9, a network device 900, including: a processor 901 and a memory 902. The memory 902 stores computer-executable instructions. The processor 901 executes the computer-executable instructions stored in the memory 902, so that the network device executes the corresponding technical solutions in the foregoing method embodiment. Implementation principles and technical effects thereof are similar, and details are not described herein again.

An embodiment of this application provides a chip. The chip includes a processor, and the processor is configured to invoke a computer program in a memory to perform the technical solutions in the foregoing embodiments. Implementation principles and technical effects of the chip are similar to those of the related embodiments, and details are not described herein again.

An embodiment of this application further provides a computer-readable storage medium. The computer-readable storage medium stores a computer program. When the computer program is executed by a processor, the method steps performed by the network device in the foregoing method embodiment are implemented.

An embodiment of this application further provides a computer-readable storage medium. The computer-readable storage medium stores a computer program. When the computer program is executed by a processor, the method steps performed by the terminal device in the foregoing method embodiment are implemented.

An embodiment of this application provides a computer program product, including a computer program. When the computer program is run, a computer is enabled to perform the method steps performed by the network device in the foregoing method embodiment.

An embodiment of this application provides a computer program product, including a computer program. When the computer program is run, a computer is enabled to perform the method steps performed by the terminal device in the foregoing method embodiment.

An embodiment of this application provides a chip or a chip system, where the chip or the chip system includes at least one processor and a communication interface. The communication interface and the at least one processor are interconnected via a line, and the at least one processor is configured to run a computer program or instructions, to perform the method steps performed by the terminal device or the method steps performed by the network device in the foregoing method embodiment. The communication interface in the chip may be an input/output interface, a pin, a circuit, or the like.

All or some of the methods described in the foregoing embodiments may be implemented by using software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that aims to carry or store required program code in a form of an instruction or a data structure, and may be accessed by the computer. In addition, any connection is appropriately referred to as a computer-readable medium. For example, if software is transmitted from a website, a server or another remote source by using a coaxial cable, an optical fiber cable, a twisted pair, a digital subscriber line (digital subscriber line, DSL) or wireless technologies (such as infrared ray, radio, and microwave), the coaxial cable, the optical fiber cable, the twisted pair, the DSL, or the wireless technologies such as infrared, radio, and microwave are included in the definition of the medium. A disk and an optical disc used in this specification include an optical disc, a laser disk, a digital versatile disc (digital versatile disc, DVD), a floppy disk, and a blue-ray disc, where the disk generally reproduces data in a magnetic manner, while the optical disc optically reproduces data by using a laser. The foregoing combinations should also be included in the scope of the computer-readable medium.

The embodiments of this application are described with reference to flowcharts and/or block diagrams of the method and the device (system) according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention should fall within the protection scope of the present invention.

## Claims

1. A communication method, comprising:
receiving a plurality of pieces of indication information, wherein the indication information indicates an identifier of information, the information is any information in a plurality of pieces of information, the information indicates whether a demodulation reference signal DMRS port corresponding to any antenna group in a plurality of antenna groups or a code division multiplexing CDM group corresponding to the antenna group is occupied, the DMRS port corresponding to the antenna group belongs to a same CDM group, and DMRS ports corresponding to different antenna groups belong to different CDM groups; and
when the information indicates the DMRS port corresponding to the antenna group, the information further indicates a number of CDM groups without data, or receiving first indication information, wherein the first indication information indicates a number of CDM groups without data.

2. The method according to claim 1, wherein the information further indicates a number of transport layers corresponding to the antenna group.

3. The method according to claim 2, wherein the number of transport layers corresponding to the antenna group is the same as a number of DMRS ports corresponding to the antenna group.

4. The method according to any one of claims 1 to 3, wherein the information further indicates a number of symbols occupied by a front-loaded DMRS.

5. The method according to claim 1, wherein different antenna groups have different function modules for baseband processing.

6. The method according to any one of claims 1 to 5, wherein the plurality of pieces of indication information comprise second indication information and third indication information, the second indication information indicates an identifier of first information, and the third indication information indicates an identifier of second information, wherein
the first information is any information in a plurality of pieces of first information, the first information indicates a DMRS port corresponding to a first antenna group, and the DMRS port corresponding to the first antenna group is at least one of DMRS ports corresponding to a first CDM group; and
the second information is any information in a plurality of pieces of second information, the second information indicates a DMRS port corresponding to a second antenna group, and the DMRS port corresponding to the second antenna group is at least one of DMRS ports corresponding to a second CDM group.

7. The method according to claim 6, wherein
the first CDM group is any CDM group in DMRS configuration type 1; and
the second CDM group is a CDM group other than the first CDM group in DMRS configuration type 1.

8. The method according to claim 6, wherein
the first CDM group is any CDM group in DMRS configuration type 2; and
the second CDM group is any CDM group other than the first CDM group in DMRS configuration type 2.

9. The method according to claim 1, wherein the plurality of pieces of indication information are carried in downlink control information DCI, a medium access control MAC control element CE, or a radio resource control RRC message.

10. The method according to claim 1, wherein the first indication information is carried in DCI, a MAC CE, or an RRC message.

11. The method according to claim 1, wherein the plurality of antenna groups are receive antenna groups of a terminal device.

12. A communication method, comprising:
determining a plurality of pieces of indication information, wherein the indication information indicates an identifier of information, the information is any information in a plurality of pieces of information, the information indicates whether a demodulation reference signal DMRS port corresponding to any antenna group in a plurality of antenna groups or a code division multiplexing CDM group corresponding to the antenna group is occupied, the DMRS port corresponding to the antenna group belongs to a same CDM group, and DMRS ports corresponding to different antenna groups belong to different CDM groups; and
sending the plurality of pieces of indication information, wherein when the information indicates the DMRS port corresponding to the antenna group, the information further indicates a number of CDM groups without data, or sending first indication information, wherein the first indication information indicates a number of CDM groups without data.

13. The method according to claim 12, wherein the information further indicates a number of transport layers corresponding to the antenna group.

14. The method according to claim 13, wherein the number of transport layers corresponding to the antenna group is the same as a number of DMRS ports corresponding to the antenna group.

15. The method according to any one of claims 12 to 14, wherein the information further indicates a number of symbols occupied by a front-loaded DMRS.

16. The method according to claim 12, wherein different antenna groups have different function modules for baseband processing.

17. The method according to any one of claims 12 to 16, wherein the plurality of pieces of indication information comprise second indication information and third indication information, the second indication information indicates an identifier of first information, and the third indication information indicates an identifier of second information, wherein
the first information is any information in a plurality of pieces of first information, the first information indicates a DMRS port corresponding to a first antenna group, and the DMRS port corresponding to the first antenna group is at least one of DMRS ports corresponding to a first CDM group; and
the second information is any information in a plurality of pieces of second information, the second information indicates a DMRS port corresponding to a second antenna group, and the DMRS port corresponding to the second antenna group is at least one of DMRS ports corresponding to a second CDM group.

18. The method according to claim 17, wherein
the first CDM group is any CDM group in DMRS configuration type 1; and
the second CDM group is a CDM group other than the first CDM group in DMRS configuration type 1.

19. The method according to claim 17, wherein
the first CDM group is any CDM group in DMRS configuration type 2; and
the second CDM group is any CDM group other than the first CDM group in DMRS configuration type 2.

20. The method according to claim 17, wherein the plurality of pieces of indication information are carried in downlink control information DCI, a medium access control MAC control element CE, or a radio resource control RRC message.

21. The method according to claim 12, wherein the first indication information is carried in DCI, a MAC CE, or an RRC message.

22. The method according to claim 12, wherein the plurality of antenna groups are receive antenna groups of a terminal device.

23. A terminal device, comprising a processor and a memory, wherein
the memory stores computer-executable instructions; and
the processor executes the computer-executable instructions stored in the memory, to enable the terminal device to perform the method according to any one of claims 1 to 11.

24. A network device, comprising: a processor and a memory, wherein
the memory stores computer-executable instructions; and
the processor executes the computer-executable instructions stored in the memory, to enable the network device to perform the method according to any one of claims 12 to 22.

25. A computer-readable storage medium, the computer-readable storage medium storing a computer program, wherein when the computer program is executed by a processor, the method according to any one of claims 1 to 11 or the method according to any one of claims 12 to 22 is implemented.

26. A chip system, comprising at least one processor and a communication interface, wherein the communication interface and the at least one processor are interconnected via a line, and the at least one processor is configured to run a computer program or instructions to perform the method according to any one of claims 1 to 11 or any one of claims 12 to 22.

27. A computer program product, comprising a computer program, wherein when the computer program is run, a computer is enabled to perform the method according to any one of claims 1 to 11 or any one of claims 12 to 22.
